(19) Europäisches Patentamt
European Patent Office
Office européen des brevets

(11) **EP 3 196 675 A1**

(12) **EUROPEAN PATENT APPLICATION**

(43) Date of publication:
**26.07.2017 Bulletin 2017/30**

(51) Int Cl.:
***G01V 3/08*** (2006.01)

(21) Application number: **16152244.6**

(22) Date of filing: **21.01.2016**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ORG GEO AS**
**4070 Randaberg (NO)**

(72) Inventors:
• FLEKKØY, Eirik, Grude
  **N-1450 Nesoddtangen (NO)**
• KJERSTAD, Jostein, Kåre
  **N-4023 Stavanger (NO)**
• HÅLAND, Endre, Berntsen
  **N-4520 Lindesnes (NO)**

(74) Representative: **Onsagers AS**
**P.O. Box 1813 Vika**
**0123 Oslo (NO)**

(54) **METHOD AND APPARATUS FOR MARINE SELF-POTENTIAL EXPLORATION**

(57)    The invention concerns a receiver assembly (10) for measuring voltage potentials in the vicinity and below a seabed that potentially contains a hydrocarbon containing reservoir. The receiver assembly comprises an electrically insulating container (8) comprising a first container section (8') and a second container section (8'') divided by one or more electrically insulating barriers (5). Both the first and the second container section have open ends, thereby allowing flow of fluid through the container when the barrier(s) is/are permeable.

The receiver assembly further comprises a plurality of electrically insulating container valves (1,2,3,4) positioned at distances $L_i$ along the exterior wall of the first container section from the barrier(s), and a voltage measuring receiver system (6,6',6'',6''') with at least one electrode connected near or at the barrier(s), at the side of the first container section.

FIG. 1

**Description**

**Technical Field:**

The present invention relates to a method for marine self-potential exploration as defined in the preamble of claim 1, and an apparatus making use of such a method.

The main characteristics of the method are that it identifies hydrocarbon deposits through the way they alter the geochemistry and electrical properties of the overburden. It is based on the changes in electrochemical potential that is caused by the upwards seepage of hydrocarbons and the measurement of the resulting, static electric field.

The basis for the technology is the observation that no caprock over any reservoir is entirely impermeable. Consequently, some micro-seepage will exist, causing environmental, chemical and mineralogical changes in the overburden, i.e. at much shallower depths than the reservoir itself. These changes give contrasts in the chemical environment and corresponding contrasts in chemical potential. This again causes changes in the electrical field that have shallow origins, allowing employment of light and mobile towing systems to measure the field.

**Background and prior art:**

It is well known that around and above a hydrocarbon reservoir the mineralogical and chemical changes will give rise to gradients in the electrochemical potential on the same scale as the reservoir itself, see for example article Revil, A. and A. Jardani, 2013, The self-potential method theory and applications in environmental geosciences *and article* Thompson K. F., J. Holt and G. Kennedy, 1997, Eh mapping locates petroleum seepage: Sea Technology, July 47-53. These potential differences will give rise to static electric fields that may be recorded by the same equipment that is used to record responses to a controlled source. But they are also detectable by much lighter systems, as is demonstrated in the article Heinson, G., A. White, S. Constable, and K. Key, 1999, Marine self potential exploration: Exploration Geophysics, 30, 1-4. Conventional systems use Ag-AgCl electrodes to minimize drift effects. These are typically paired up in dipoles of lengths 3-12 m which will allow measurements of electric field variations of a few hundred nV/m.

The conventional technology is limited by the use of single electrode pairs, where there is no internal cancellation of the background noise such as that caused by magnetotelluric currents. Nor is there any cancellation of drift in the electrode potentials. Moreover, the potential field $V$ is calculated from the $E$-field measurement by simple integration of the (processed) field using $\mathbf{E} = -\nabla V$. Hence, the potential in locations where survey lines are crossing may as a result very well differ.

The present invention aims to remedy at least the first two weaknesses by applying electrode configuration that (i) cancel out components of the background noise and (ii) removes the effect of electrode drift.

In order to remove the inconsistencies in the resulting $V$-calculation, the invention employs an inversion scheme where data points are used to determine the field values $V(\mathbf{x})$ for at least some, preferably all, measurement positions x on survey lines.

**Summary of the invention:**

The present invention is set forth and characterized in the main claims, while the dependent claims describe other characteristics of the invention.

In particular, the invention concerns a receiver assembly, preferably submersed in salt water, suitable for measuring voltage potentials in the vicinity and below a seabed that potentially contains a hydrocarbon containing reservoir. The receiver assembly comprises an electrically insulating container comprising a first container section and a second container section divided by one or more electrically insulating barriers. Both the first and the second container section have open ends, thereby allowing flow of fluid through the container when the barrier(s) is/are fluid permeable. The term 'electrically insulating' is hereinafter defined as an electrical conductivity being significantly lower than the mean electrical conductivity of sea water. Mean sea water conductivity has been measured to be about 3.8 S/m at 11.5 degree Centigrade and at a salinity of 33 PSU (practical salinity unit) (see http://bml.ucdavis.edu/boon/seawater.html). In an exemplary embodiment the container and/or the barrier(s) may be made of a material having a mean conductivity of less than 10 % of the mean conductivity of seawater at the mean temperature and mean salinity prevailing after submersion and during actual voltage potential measurements such as less than 0.4 S/m.

The receiver assembly further comprises a plurality of electrically insulating container valves positioned at distances $L_i$, preferably equally spaced, along the exterior wall of the first container section from the barrier(s), and a voltage measuring receiver system with at least one electrode connected near or at the barrier(s), at the side of the first container section.

Each of the container valves is configured to enable switching between an open position and a closed position across the exterior wall.

In an advantageous embodiment the receiver assembly further comprises one or more barrier valves situated within the barrier(s). The barrier valve(s) is/are configured to enable switching between an open position and a closed position across the barrier(s) wherein the electrically conductivity across the barrier(s) are significantly lower in the closed position than in the open position, for example lower than 10 %. The higher electrical conductivity may be set up by flow of electrically conducting fluid such as seawater.

In another advantageous embodiment the voltage measuring receiver system comprises at least two voltage measuring receiver electrodes connected near and across the barrier(s), thereby enabling voltage potential measurements thereacross. The at least one voltage measuring receiver electrode may be an Ag-AgCl electrode.

In another advantageous embodiment the container has a tubular form and the open ends of both the first and the second container sections are situated distal to the barrier(s).

The invention also concerns a survey system suitable for measurement of voltage potentials below the seabed. The system comprises one or more receiver assemblies in accordance with any of the above mentioned features and one or more towing vessels allowing towing of the receiver assembly or assemblies. The system is configured such that, during use, the towing vessel(s) is/are towing the receiver assembly or assemblies submerged in water along a survey line while the system is measuring voltage potentials as function of receiver assembly positions.

In an advantageous embodiment the towing vessel(s) is/are unmanned.

In an advantageous embodiment the towing vessel is configured for acquiring seismic data, providing seismic data acquisition support for example to another vessel such as an unmanned vessel, acquiring electromagnetic data using an electromagnetic source or any combination thereof.

In another advantageous embodiment the positions of the towing vessel(s) and/or the receiver assembly or assemblies are tracked by a global positioning system.

In another advantageous embodiment the system comprises a plurality of towing vessels, wherein each towing vessel is towing at least one of the inventive receiver assembly or assemblies and wherein the mutual positions $i,j$ of each receiver assembly and/or each towing vessel are tracked.

The invention also concerns a method for measuring voltage potentials during towing of a receiver assembly in accordance with any one of the above mentioned features in water. The towing is performed above a geological target area situated below a seabed. For each of a plurality of measurement points $\mathbf{x}$ along a survey line, the method comprises the step of switching a first container valve of the plurality of electrically insulating container valves positioned at a first distance $L_1$ from the barrier(s) to an open position. The first container valve should be the container valve in open position positioned nearest to the barrier(s). Hence, any other container valves situated nearer to the barrier(s) should be closed, or remain closed. The method comprises furthermore the steps measuring a first voltage potential $V_1$ applying the voltage measuring receiver system, switching the first container valve to a closed position, switching a second container valve of the plurality of electrically insulating container valves positioned at a second distance $L_2$ from the barrier(s) to an open position, said second container valve being the container valve in open position situated nearest to the barrier(s), that is, after closing the first container valve, measuring a second voltage $V_2$ applying the voltage measuring receiver system, calculating the voltage difference $\nabla V$ of the first voltage $V_1$ and second voltage $V_2$, calculating the distance difference $\Delta L$ of the first distance $L_1$ and second distance $L_2$ and calculating the ratio between the voltage difference $\nabla V$ and the distance difference $\Delta L$, the ratio representing the electrical field $E$ at the respective measurement point. The voltage potential $V_i$ (where the index $i$ represent the particular container valve) may be described as a container valve independent electrical field $E$ across the barrier(s) times the distance $L_i$ from the barrier(s) to the location of the nearest container valve in open position, and added a container valve independent drift term $a$ being a voltage potential contribution generated by drift effects from telluric currents and/or drift in electrode potential(s). By implementing the above mentioned method the electrical fields are found for each of the plurality of measurement points $\mathbf{x}$ setting up the survey line. The above mentioned steps are preferably performed in sequence.

In an advantageous embodiment the method, for at least one of the measurement points $\mathbf{x}$, further comprises the steps of switching one or more electrically insulating barrier valves situated within the barrier(s) to an open position, where the barrier valve(s) is/are configured to enable switching between an open position and a closed position across the barrier(s), and measuring the above mentioned drift voltage $a$ applying the voltage measuring receiver system since in this case the distance $L_i$, and thereby also the voltage potential $V_i$, goes to zero.

In another advantageous embodiment the method, for each of the plurality of measurement points $\mathbf{x}$ along the survey line, comprises the step of approximately measuring a derivative of the electric field $\partial E/\partial x$ by measuring the differences in electric field $E$ between the position $x$ and the position $x+v\Delta t$ after a time period $\Delta t$ when the receiver assembly is moving at a velocity v.

In another advantageous embodiment the method, for at least some of the plurality of measurement points $\mathbf{x}$ along the survey line, comprises the step of finding an estimated voltage potential $V$ resulting from a minimization of an objective function $\Phi(V)$ associated with the geological target area, the objective function $\Phi(V)$ being dependent on the difference between an estimated second or higher order derivative potential $\partial^n V(\mathbf{x}, t)/\partial x^n$ and a measured second or higher order derivative potential $\partial^n V^d(\mathbf{x},t)/\partial x^n$.

In another advantageous embodiment the measured second or higher order derivative potential $\partial^n V^d(\mathbf{x},t)/\partial x^n$ is deduced from the measured first derivative $\partial E/\partial x$ of the electric field $E$.

In another advantageous embodiment the objective function $\Phi(V)$ includes a regulation term $\Phi_{reg}$ being dependent on the difference between at least two potentials $V$ at an intersecting position $x_c$, the at least two potentials being estimated based on different survey lines.

In another advantageous embodiment the measurements are performed on a vessel moving along the survey lines, for example an unmanned vessel.

The above mentioned invention hence enables measurements of sub-sea electrical fields with a minimal effect of electrode drift. The inventive concept is based on the consecutive recording of fields by changing the effective receiver distance by the opening and closing of electrically insulating valves / container valves, thus isolating the effect of the external field, rather than the electrode drift terms.

The objective of this inventive concept is to perform an optimization study based on the above mentioned objective function associated with the hydrocarbon producing reservoir.

The advantages of the invention may be summarized as follows:

- The electrode system measuring the field is designed to eliminate, or at least strongly reduce, electrode drift effects.
- the configuration of the electrode system is designed to reduce external noise having long range correlations.
- the related method for processing the data is designed to further reduce the effect of drift and external noise and also to optimize internal consistency of the data among crossing survey lines.

The effect of external and internal noise is thereby minimized by virtue of the electrode design and configuration, allowing for data acquisition by means of small unmanned vessels and allowing mapping of the electrical potential having optimized accuracy and higher internal consistency.

In the following description, specific details are introduced to provide a thorough understanding of embodiments of the system and the method. One skilled in the relevant art, however, will recognize that these embodiments can be practiced without one or more of the specific details, or with other components, systems, etc. In other instances, well-known structures or operations are not shown, or are not described in detail, to avoid obscuring aspects of the disclosed embodiments.

**Brief description of the drawings:**

Fig. 1 is an illustration of a receiver assembly in accordance with the invention,

Fig. 2 is an illustration of a field measurement system in accordance with the invention, where one receiver assembly as shown in figure 1 is being towed after a vessel at a velocity $V$,

Fig. 3 illustrates three independent field measurement systems, where each measurement system comprises a vessel towing a receiver assembly as shown in figure 1 at a velocity $V$,

Fig. 4 is a graph indicating a slow drift term $a(t)$ comprising electrode drift and error due to magnetotelluric fields, where the horizontal axis represents time in seconds and the vertical axis represents drift distance in meters, and

Fig. 5 presents measurements of self potential anomalies across a known hydrocarbon reservoir having its prospect boundaries within the interval marked by stapled vertical lines.

**Detailed description of the invention**

*The receiver configuration:*

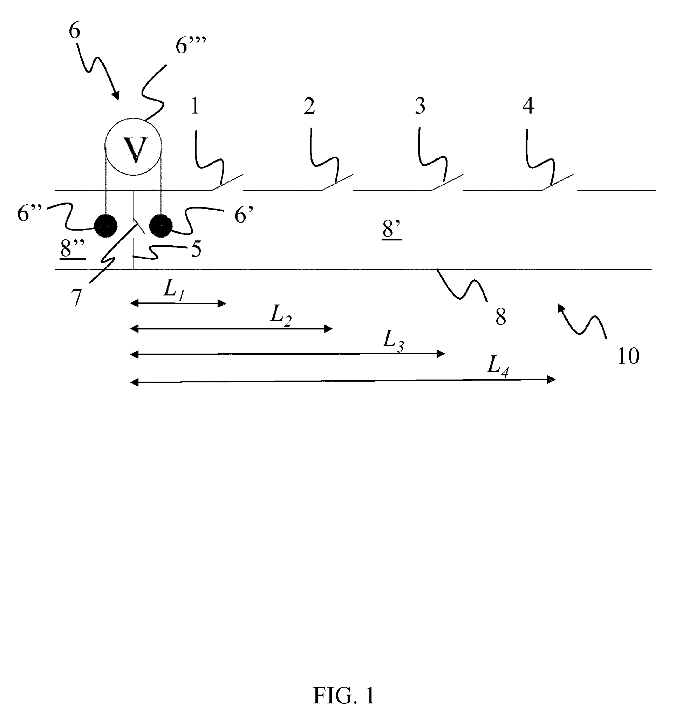

Figure 1 shows measuring system 6 including a voltmeter 6''' and receiver electrodes ,6',6" coupled to an electrically insulating pipe 8 across a salt water bridge 5. The pipe 8, forming part of the receiver assembly 10, is open to sea water at both ends and comprises a plurality of insulating pipe valves 1-4 arranged along the pipe wall at one side 8' of the salt water bridge 5. The distances $L_i$ in figure 1 is measured from the position of the salt water bridge 5. The inventive concept is to eliminate the drift effect(s) by opening and closing the plurality of pipe valves 1-4 in sequence while measuring the voltage across the corresponding salt water bridge 5. In addition to the pipe valves 1-4, the salt water bridge 5 is equipped with one or more salt water valves 7 that is/are configured such that an electrical current is allowed to flow across the salt water bridge 5 when the salt water valve 7 is opened and to prevent (or at least significantly reduce) the current when the salt water valve 7 is closed. It is here assumed that the electrical conductivity of the sea water is significantly higher than the electrical conductivity of the pipe wall 8 and/or the salt water bridge 7. This conductivity is measured quantitatively by mounting the voltmeter *V* 6"' across the salt water bridge, thereby measuring the salt water bridge voltage as function of time *V(t)* and/or state of salt water valve 7. Furthermore, this time dependent voltage may be expressed as

$$V(t) = E(t)L + a(t) \qquad (1)$$

where *E(t)* is the true electric field in the direction of the pipe 8, *L* is the distance measured from the salt water bridge 5 and *a(t)* is the voltage contribution generated by the drift effects from the magnetotelluric currents and/or drift in electrode potentials. If at least two pipe valves 1,2 are open one at a time, followed by measurement of the voltage V across the salt water bridge 5, the drift term *a(t)* remains unchanged, and the corresponding change in voltage becomes:

$$\Delta V(t) = E(t)\Delta L \qquad (2)$$

i.e., independent of the drift term. Here $\Delta L = L_{i+1} - L_i$, where *i* = 1, 2, 3, thus representing the distance difference between two pipe valves 1,2 arranged along the pipe 8. Magnetotelluric currents are currents induced by time-varying magnetic field external to the earth as a consequence of the Faraday's law of induction.

The salt water bridge 5 may be opened in order to measure the drift term *a(t)* directly since, in this case, the *E*-field term *E(t)L* goes to zero. By use of this method *a(t)* may be subtracted off any measurement made where the other pipe valves 1-4 are in fixed positions.

The electrodes 6',6" themselves may be conventional Ag-AgCl electrodes.

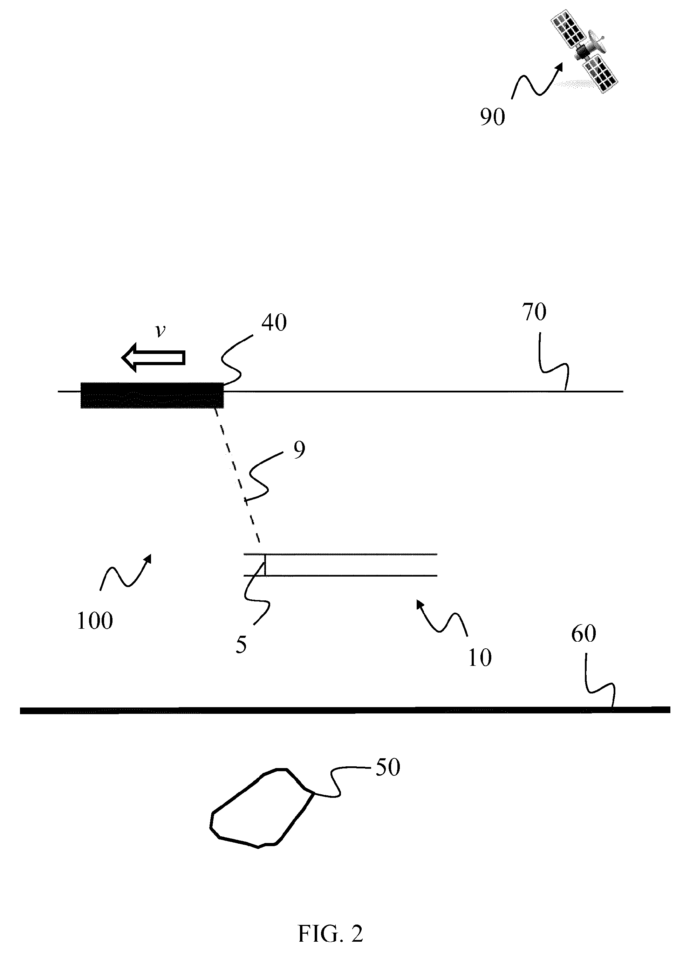

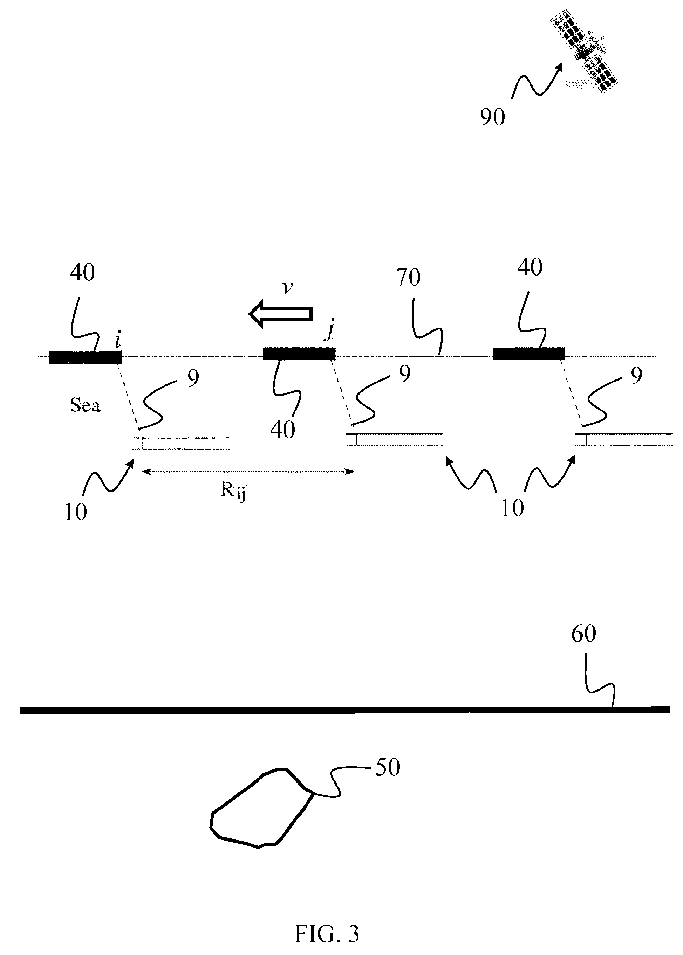

As illustrated in figure 2, the receiver assembly 10 in figure 1 may be towed after a vessel 40 at a certain depth under the water line 70. The receiver assembly or receiver assemblies 10 is / are typically located a few meters below the sea surface 70. Figure 3 illustrates a system comprising a system 100 with a plurality of receiver assemblies 10. In this case all (or at least the majority of) the receiver assemblies 10 should preferably move at an approximately common velocity *v* at separation *R*. This advantageous embodiment may be realized by towing more than two receiver assemblies 10 after the same vessel 40 while detecting and possibly regulating their mutual distances *R*. The detection may be performed by use of Global Positioning System (GPS) 90 which herein includes any navigation system that may provide location and time information of the system 100. In another embodiment a plurality of vessels 40 may tow one or more receiver assemblies 10, thereby ensuring independent *E*-field measurements at different locations. Figure 3 illustrates an embodiment with three data acquisition vessels 40, where each of the vessels 40 tows a single receiver assembly 10. In this particular embodiment it is advisable to continuously, or near continuously, record the relative distances $R_{ij}$ between the receiver assemblies 10 as function of receiver assemblies' 10 corresponding vessel 40 *i* and *j*. The vessel(s) 40 may be manned, unmanned, or a combination thereof. An example of an unmanned vessel is the Waveglider® by the company Liquid Robotics (see webpage http://liquidr.com/technology/waveglider/how-it-works.html) which utilizes the wave motion to obtain the desired propulsion. As mentioned above, the velocity *v* and positions may be monitored and controlled via satellite signals, and the data may be downloaded continuously. Note that the number of receiver assemblies 10 and/or vessels 40 may be increased to any feasible size. As for the embodiment in figure 2, the receiver assemblies 10 in the multi field measurement systems 100 in figure 3 may be located at any distance under the water line 90, but preferably a few meters.

*Method and data processing:*

As a result of the measurements by the above mentioned systems 100, both the electric field *E*(**x**) along the tow direction **x,** and their associated gradients ∂E/∂**x**, may be measured (discretely or continuously)

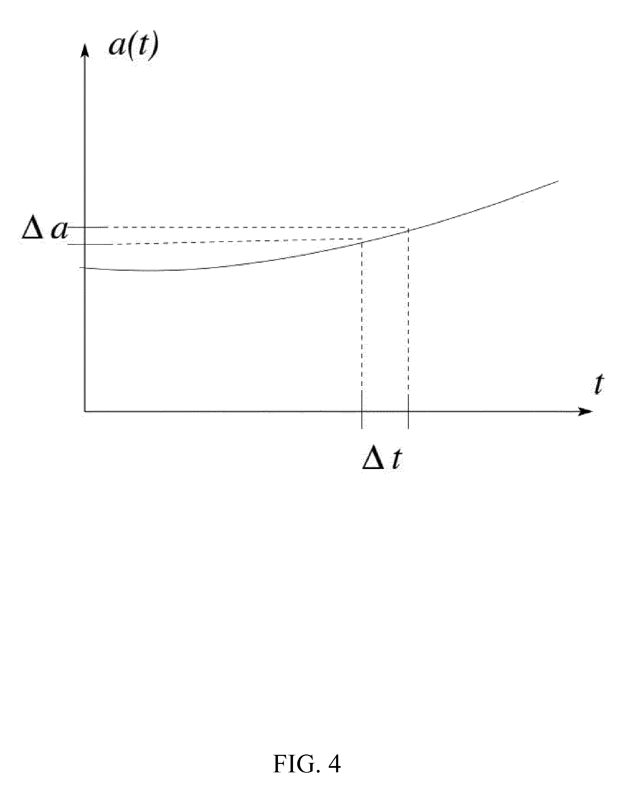

Since the receiver assembly (or assemblies) 10 moves at velocity v, the gradients may be measured approximately as the difference of successive field values (*E*(**x** + *v∆t*) - *E(x)*) / (*v∆t*) ≅ ∂E/∂x. Likewise, higher order derivatives may be calculated by similar discretization. The reason for doing the measurements in this way is to remove slow drift term *a(t)* as illustrated in the graph of figure 4. This term both includes electrode drift and magnetotelluric fields, and adds to the static background $E_0$ to give the measured electric field

$$E(\mathbf{x}, t) = E_0(\mathbf{x}, t) + a(t) \qquad (3)$$

By calculating

$$\frac{E(\mathbf{x} + V\Delta t) - E(\mathbf{x})}{V\Delta t}$$

$$= \frac{E_0(\mathbf{x} + V\Delta t) - E_0(\mathbf{x})}{V\Delta t} + \frac{a(t + \Delta t) - a(t)}{V\Delta t}$$

$$= \frac{E_0(\mathbf{x} + V\Delta t) - E_0(\mathbf{x})}{V\Delta t} + \frac{\Delta a}{V\Delta t}$$

the correction term $a(t)$ is effectively replaced by the much smaller $\Delta a$ as clearly illustrated in figure 4. As a result, the second derivative of the static potential $\partial^2 V/\partial x^2$ may be recorded in order to reduce the contribution from the drift term (via the equation $\mathbf{E} = -\nabla V$). By taking higher derivatives, $\partial^n V/\partial x^n$ with n > 2, even more of the background noise (in form of the drift term $a(t)$) may be eliminated.

Conventionally, the potential V is obtained by integrating the $E$-field ($\mathbf{E} = -\nabla V$). The disadvantage of this direct approach is the inclusion of noise, resulting in a erroneous difference in potential $V$ where the survey lines are crossing (points of intersection). The inventive method strongly reduces this problem by virtue of the data processing and/or by way the data is used for deriving at the potential $V$. Instead of applying a direction integration it is proposed to apply an inversion algorithm taking the local $V(\mathbf{x})$ as inversion parameters. The objective function that is minimized by the inversion algorithm may be written as

$$\Phi(V, V^d) = \Phi_0 \left( \frac{\partial^n V(x,t)}{\partial x^n} - \frac{\partial^n V^d(x,t)}{\partial x^n} \right) + \Phi_{reg}(V) \qquad (5)$$

where $\partial^n V^d(x,t)/\partial x^n$ are measured values of the derivatives and $\Phi_{reg}$ is a regularization term that penalizes behavior of the fields that is known to be incorrect. A typical equation used to describe this regulation term is

$$\Phi_{reg} = \sum_{\mathbf{x}} \gamma_0 V(\mathbf{x}, t) + \gamma_1 \frac{\partial V}{\partial x} + \gamma_2 \frac{\partial^2 V}{\partial x^2} + \gamma_c \sum_{i_c} \left( V\left(\mathbf{x}_{i_c,a}\right) - V\left(\mathbf{x}_{i_c,b}\right) \right) \qquad (6)$$

where the derivatives $\partial^n V(x,t)/\partial x^n$ are approximated as finite differences between neighboring measurement points along a survey line, and the sum $\sum_{ic}$ runs over all $\mathbf{x}_{ic}$ where the lines intersect. The indexes $i_c,a$ and $i_c,b$ indicate approaches toward the same intersecting measurement point $x_{ic}$ along different survey lines $a$ and $b$. The term $\gamma_0 V(\mathbf{x},t)$ penalizes drift away from zero and has the effect of reducing the average of $V$. For instance, where survey lines cross, the $V$-values must be consistent. This may be ensured by including a significant increase in $\Phi_{reg}$ from discontinuities in $V$.

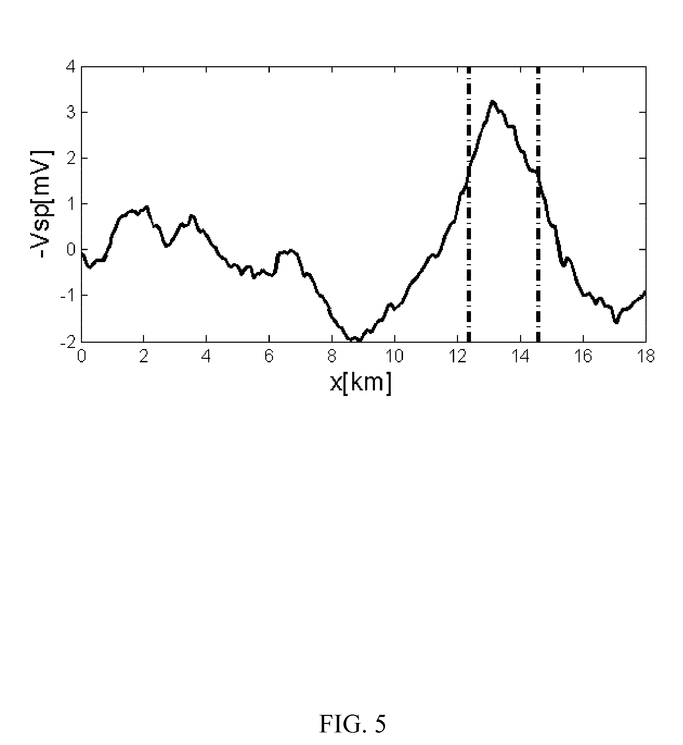

Figure 5 presents a field example showing a survey of self potential anomalies across a known hydrocarbon reservoir 50. The anomalies are derived by minimization of eq. (5). The vertical stapled lines at x ≈12,5 km and x ≈14,5 km mark the location of the reservoirs prospect boundaries. An identification of the hydrocarbon reservoir 50 may be obtained from independent geological information such as seismic data. Due to the clear correlation between the location of the prospect boundaries and the intensity of the potential anomalies, the origin of the anomalies is believed to be caused by mineralogical changes in the overburden of hydrocarbon deposits. The increase in the self potential $V$ over the reservoirs is typically a few millivolts, that is, well within the detectable range.

In the preceding description, various aspects of the assembly, the system and the method according to the invention have been described with reference to the illustrative embodiment. For purposes of explanation, specific numbers and configurations were set forth in order to provide a thorough understanding of the invention and its workings. However, this description is not intended to be construed in a limiting sense. Various modifications and variations of the illustrative embodiment, as well as other embodiments of the system, which are apparent to persons skilled in the art to which the disclosed subject matter pertains, are deemed to lie within the scope of the present invention.

**Claims**

**1.** A receiver assembly (10) for measuring voltage potentials in the vicinity and below a seabed (60) potentially containing hydrocarbons (50), comprising

- an electrically insulating container (8) comprising a first container section (8') and a second container section (8") divided by an electrically insulating barrier (5), the first and second container sections (8',8") having open ends,
- a plurality of electrically insulating container valves (1,2,3,4) positioned at distances $L_i$ along the exterior wall of the first container section (8') from the barrier (5), each of the container valves (1,2,3,4) being configured to enable switching between an open position and a closed position across the exterior wall and

a voltage measuring receiver system (6,6',6",6"') with at least one electrode (6',6") connected near or at the barrier (5) at the side of the first container section (8').

2. The receiver assembly (10) in accordance with claim 1, **characterized in that** the receiver assembly (10) further comprises an electrically insulating barrier valve (7) situated within the barrier (5), the barrier valve (7) being configured to enable switching between an open position and a closed position across the barrier (5).

3. The receiver assembly (10) in accordance with claim 1 or 2, **characterized in that** the voltage measuring receiver system comprising at least two voltage measuring receiver electrodes (6,6',6") connected near and across the barrier (5).

4. The receiver assembly (10) in accordance with any one of preceding claims, **characterized in that** the container (8) has a tubular form and the open ends of both the first and second container sections (8',8") are situated distal to the barrier (5).

5. A survey system (100) for measurement of voltage potentials in the vicinity and below the seabed (60), comprising

- a receiver assembly (10) in accordance with any one of the preceding claims and
- towing vessel (40) allowing towing of the receiver assembly (10),

wherein, during use, the towing vessel (100) is towing the receiver assembly (10) submerged in water along a survey line while the system is measuring voltage potentials as function of receiver assembly positions.

6. The system (100) in accordance with claim 5, **characterized in that** the towing vessel (40) is an unmanned vessel.

7. The system in accordance with claim 5 or 6, **characterized in that** the towing vessel (40) is configured for acquiring seismic data, providing seismic data acquisition support, acquiring electromagnetic data using an electromagnetic source or any combination thereof.

8. The system (100) in accordance with any one of claims 5 - 7, **characterized in that** the positions of at least one of the towing vessel (40) and the receiver assembly (10) are tracked by a global positioning system (90).

9. The system (100) in accordance with any one of claims 5 - 8, **characterized in that** the system (100) comprises a plurality of towing vessels (40), wherein each towing vessel (40) is towing at least one of the receiver assembly (10) and wherein the mutual positions $i,j$ of each receiver assembly (10) and/or each towing vessel (40) are tracked.

10. A method for measuring voltage potentials during towing of a receiver assembly (10) in accordance with any one of claims 1-4 in water, above a geological target area (50) below a seabed (60), **characterized in that,** for each of a plurality of measurement points x along a survey line, the method comprises the steps of

- switching a first container valve (1) of the plurality of electrically insulating container valves (1,2,3,4) positioned at a first distance $L_1$ from the barrier (5) to an open position, said first container valve (1) being the container valve in open position positioned nearest to the barrier (5),
- measuring a first voltage potential $V_1$ applying the voltage measuring receiver system (6)
- switching the first container valve (1) to a closed position,
- subsequently switching a second container valve (2) of the plurality of electrically insulating container valves (1,2,3,4) positioned at a second distance $L_2$ from the barrier (5) to an open position, said second container valve (2) being the container valve in open position situated nearest to the barrier (5),
- measuring a second voltage $V_2$ applying the voltage measuring receiver system (6),

- calculating the voltage difference $\nabla V$ of the first voltage $V_1$ and second voltage $V_2$,
- calculating the distance difference $\Delta L$ of the first distance $L_1$ and second distance $L_2$ and
- calculating the ratio between the voltage difference $\Delta V$ and the distance difference $\Delta L$, the ratio representing the electrical field E at the respective measurement point.

11. The method in accordance with claim 10, **characterized in that,** for at least one of the measurement points **x,** the method further comprises the steps of

- switching at least one electrically insulating barrier valve (7) situated within the barrier (5) to an open position, the at least one barrier valve (7) being configured to enable switching between an open position and a closed position across the barrier (5), and
- measuring a drift voltage $a$ applying the voltage measuring receiver system (6).

12. The method in accordance with claim 10 or 11, **characterized in that,** for each of the plurality of measurement points **x** along the survey **line,**
the method further comprises the step of

- measuring a derivative of the electric field $\partial E/\partial x$ by measuring the differences in electric field $E$ between the position x and the position $x+v\Delta t$ after a time period $\Delta t$ when the receiver assembly (10) is moving at a velocity v.

13. The method in accordance with claim 12, **characterized in that,** for at least some of the plurality of measurement points **x** along the survey line,
the method further comprises the step of

- finding an estimated voltage potential $V$ resulting from a minimization of an objective function $\Phi(V)$ associated with the geological target area (50), the objective function $\Phi(V)$ being dependent on the difference between an estimated second or higher order derivative potential $\partial^n V(\mathbf{x},t)/\partial x^n$ and a measured second or higher order derivative potential $\partial^n V^d(\mathbf{x},t)/\partial x^n$.

14. The method in accordance with claim 13, **characterized in that** the measured second or higher order derivative potential $\partial^n V^d(\mathbf{x},t)/\partial x^n$ is deduced from the measured first derivative $\partial E/\partial x$ of the electric field $E$.

15. The method in accordance with claim 13 or 14, **characterized in that** the objective function $\Phi(V)$ includes a regulation term $\Phi_{reg}$ being dependent on the difference between at least two potentials $V$ at an intersecting position $x_c$, the at least two potentials being estimated based on different survey lines.

FIG. 1

FIG. 2

FIG. 3

FIG. 4

FIG. 5

Europäisches
Patentamt

European
Patent Office

Office européen
des brevets

# EUROPEAN SEARCH REPORT

Application Number

EP 16 15 2244

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | GRAHAM HEINSON ET AL: "Marine self-potential gradient exploration of the continental margin", GEOPHYSICS, vol. 70, no. 5, 1 September 2005 (2005-09-01), pages G109-G118, XP055285635, US ISSN: 0016-8033, DOI: 10.1190/1.2057981 * page G10, column 2 - page G11, column 1 * | 1-15 | INV. G01V3/08 |
| A | STEVEN CONSTABLE: "Review paper: Instrumentation for marine magnetotelluric and controlled source electromagnetic sounding", GEOPHYSICAL PROSPECTING, vol. 61, 2013, pages 505-532, XP002759501, * page 511 - page 512 * * page 515, column 2 - page 516 * | 1-15 | |
| A | US 2009/242274 A1 (CHEN MIN-YI [US] ET AL) 1 October 2009 (2009-10-01) * paragraphs [0098], [0103], [0104] * | 1-15 | TECHNICAL FIELDS SEARCHED (IPC) G01V G01N |

The present search report has been drawn up for all claims

| Place of search | Date of completion of the search | Examiner |
|---|---|---|
| The Hague | 6 July 2016 | Lorne, Benoît |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 15 2244

This annex lists the patent family members relating to the patent documents cited in the above-mentioned European search report.
The members are as contained in the European Patent Office EDP file on
The European Patent Office is in no way liable for these particulars which are merely given for the purpose of information.

06-07-2016

| Patent document cited in search report | Publication date | Patent family member(s) | Publication date |
|---|---|---|---|
| US 2009242274 A1 | 01-10-2009 | NONE | |

EPO FORM P0459

For more details about this annex : see Official Journal of the European Patent Office, No. 12/82

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Non-patent literature cited in the description**

- **REVIL, A. ; A. JARDANI.** *The self-potential method theory and applications in environmental geosciences,* 2013
- **THOMPSON K. F. ; J. HOLT ; G. KENNEDY.** *Eh mapping locates petroleum seepage: Sea Technology,* July 1997, 47-53
- **HEINSON, G. ; A. WHITE ; S. CONSTABLE ; K. KEY.** *Marine self potential exploration: Exploration Geophysics,* 1999, vol. 30, 1-4